# EUROPÄISCHE PATENTSCHRIFT

(11) **EP 0 784 740 B1**
(45) Veröffentlichungstag und Bekanntmachung des Hinweises auf die Patenterteilung: **16.12.1998**
(21) Anmeldenummer: 95934659.4
(22) Anmeldetag: 06.10.1995
(51) Int. Cl.: F01N 3/20

(54) **ELEKTRISCH BEHEIZBARER STARTERKAT**
ELECTRICALLY HEATABLE STARTER CATALYTIC CONVERTER
CATALYSEUR DE DEMARRAGE A CHAUFFAGE ELECTRIQUE

(30) Priorität: 06.10.1994 DE 4435784
(43) Veröffentlichungstag der Anmeldung: 23.07.1997
(73) Patentinhaber: Heraeus Electro-Nite International N.V., 3530 Houthalen (BE)
(72) Erfinder: Hotz, Uwe, D-76461 Muggensturm (DE); Fischer, Hagen, D-76137 Karlsruhe (DE)
(74) Vertreter: Kühn, Hans-Christian
(86) Internationale Anmeldenummer: EP9503954
(87) Internationale Veröffentlichungsnummer: WO9611329

(56) Entgegenhaltungen:
- WO-A-89/00356
- WO-A-90/12201
- WO-A-93/05284
- DE-A- 2 230 663
- DE-A- 4 243 904
- US-A- 4 737 601

## Beschreibung

Die Erfindung betrifft einen elektrisch beheizbaren Starterkat gem. dem Oberbegriff der Hauptanspruchs.

Solche Starterkats sind in einer Vielzahl von Ausführungsformen z. B. aus WO90/12201 bekannt und haben sich bewährt. Von Nachteil ist jedoch, daß die elektrische Anschlußleitung ein Problemfall ist. So eignen sich kunststoffummantelte Anschlußleitungen nicht für den feuchtigkeits- und gasdichten Anschluß bei hoher Temperatur und in korrosiven Medien, wie z.B. in dem Abgas von Verbrennungsmotoren. Ferner scheiden Klemm- oder Schraubverbindungen aus konventionellen Leitermaterialien, z.B. Kupfer, Nickel oder deren Legierungen aus, weil sie aufgrund cer Oxidation und/oder Korrosion der Grenzflächen keine dauerhaft zuverlässige elektrische Verbindung gewährleisten. Insbesondere entstehen hohe Übergangswiderstände. Werden andererseits Edelmetalle oder Edelmetallüberzüge auf den Leiterwerkstoffen verwendet, so entstehen hohe Kosten. Andererseits ist die Absenkung der Temperartur im Anschlußbereich des Starterkats nur durch aufwendige konstruktive Maßnahmen zu erreichen. Bei beschränktem Bauraum solcher Starterkats müssen aufgrund solcher Maßnahmen Funktionsnachteile in Kauf genommen werden, beispielsweise die Beschränkung des Abgasstroms auf kontaktierungsferne Bereiche.

Der Erfindung liegt deshalb die Aufgabe zugrunde, einen dauerhaft zuverlässigen elektrischen Anschluß zu schaffen. Diese Aufgabe wird bei einem gattungsgemäßen elektrischen Starterkat gem. dem Oberbegriff des Hauptanspruchs erfindungsgemäß durch dessen kennzeichnende Merkmale gelöst.

So wird also der Vorzug als elektrische Anschlußleitung eine Metallmantelleitung mit zumindest einem davon mittels eines Minerals elektrisch isolierten Innenleiter verwendet. Letzterer ist kraftschlüssig mit der elektrischen Widerstandsheizung, beispielsweise durch Schweißen oder Löten (WIG-Laser- oder Punktschweißen) verbunden. Die Metallmantelleitung ist ferner durch eine Öffnung in das metallische Gehäuse hineingeführt und mit diesem durch Verschweißen oder Verlöten längst des Randes der Öffnung gasdicht verbunden. Somit ist in einfacher Weise sichergestellt, daß einerseits die Gasdichtigkeit des Gehäuses nicht in Frage steht, zum anderen die Anschlußleitung in heißer und korrosiver Umgebung dauerhaft zuverlässig gleichwohl angeschlossen werden kann.

Zweckmäßige Ausgestaltungen und Weiterbildungen der Erfindung sind in den Unteransprüchen gekennzeichnet. Insbesondere kann am kalten, d.h. dem außerhalb des Gehäuses befindlichen Ende der Metallmantelleitung ein Schraub- oder Klemmanschluß an dem Innenleiter angeschweißt, angelötet oder angekrimpt sein. Über die Verbindung am kalten Ende kann zusätzlich als Feuchtigkeitsschutz eine elektrisch isolierende Hülle angebracht sein. Zwischen dem Metallmantel und dem Innenleiter liegt vorzugsweise eine mineralische elektrische Isolierschicht, die z.B. aus MgO und/oder Al₂O₃, Quarz oder Glas bestehen kann. Die vorzugsweise beiden Enden der Metallmantelleitung werden zum Schutz vor Austrag des Isolators sowie dem Eindringen von Gasen, Feuchtigkeit und den Isolationswiderstand herabsetzender Verschmutzung dicht verschlossen. Hierzu eignen sich insbesondere am kalten Ende Kunstharze, am heißen oder kalten Ende keramische Klebmassen, insbesondere auf der Basis von Aluminium-Oxid oder Magnesium-Oxid. Ferner können keramische Formkörper vorgesehen sein, die mit dem Metallmantel und dem Innenleiter verklebt oder verglast sind.

Mit den erfindungsgemäßen Metallmantelleitern kann man den Temperaturgradienten über die Länge und die sonstige Ausgestaltung so einstellen, daß an deren kaltem Ende eine Temperatur von nicht mehr 250° Celsius herrscht. Infolge dessen kann dort ein preisgünstiges, kunststoffisoliertes Kupferkabel verwendet werden. Die Versprödung der Isolation der Anschlußleitung und Einfluß von hoher Temperatur und Vibration beim Stande der Technik tritt nicht mehr auf. Außerdem erlaubt die Metallmantelleitung eine formbeständige Biegekontur der Anschlußleitung ohne zusätzliche Halte Elemente.

Die erfindungsgemäß verwendete Metallmantelleitung kann nicht nur bei Starterkatalysatoren, sondern darüber hinaus an allen Orten mit einer heißen und korrosiven Umgebung erfolgen.

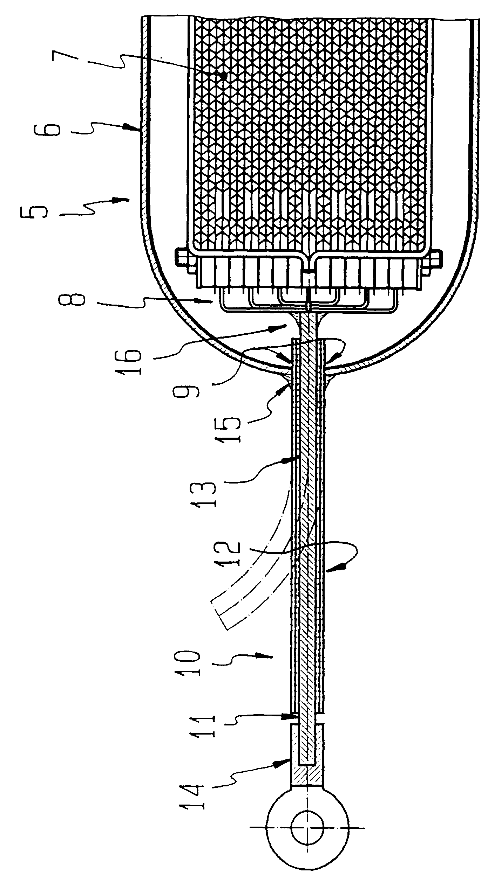

Ein Ausführungsbeispiel der Erfindung wird nachfolgend unter Bezugnahme auf die Zeichnung näher erläutert, die einen schematischen Querschnitt durch einen Starterkatalysator zeigt.

Der insgesamt mit 5 bezeichnete Starterkatalysator weist ein Gehäuse 6 sowie einen darin angeordneten eigentlichen Katalysator 7 auf, der mit einer elektrischen Widerstandsheizung, schematisch mit 8 bezeichnete versehen ist. Durch eine Öffnung 9 ist eine elektrische Anschlußleitung 10 in das Gehäuse 6 hineingeführt,

Diese elektrische Anschlußleitung 10 ist als Metallmantelleitung mit zumindest einem, davon mittels eines Minerals, z.B. MgO oder Al₂O₃ elektrisch isolierter Innenleiter 11 ausgebildet. Beim wiedergegebenen Ausführungsbeispiel ist ein einziger Innenleiter konzentrisch zu dem äußeren Metallmanter 12 vorgesehen. Dazwischen ist das elektrisch isolierende Mineral 13 vorgesehen. Die Anschluß leitung 10 ist durch die Öffnung 9 in das Innere des Gehäuse 6 hineingeführt und längs des Randes der Öffnung 9 durch Schweißen 15 verbunden, so daß sich insgesamt eine gasdichte Hindurchführung ergibt. Der Innenleiter 11 ist mit der elektrischen Widerstandsheizung 8 ebenfalls durch eine Schweißverbindung 16 verbunden.

Am außerhalb des Gehäuses 6 befindlichen - kalten - Ende der Anschlußleitung 10 ist ein insgesamt schematisch mit 14 bezeichnete Schraub- oder Klemmverschluß vorgesehen. Beide Enden sind durch eine - nicht gezeigte - keramische Klebmasse verschlossen, so daß der mineralische Isolator gegen Feuchtigkeit, Gas und Verschmutzung geschützt ist.

## Patentansprüche

1. Elektrisch beheizbarer Starterkat (5) mit einem metallischen Gehäuse (6), mit einem darin angeordneten, dem Abgasstrom ausgesetzten eigentlichen Katalysator (7), der eine elektrische Widerstandsheizung (8) aufweist, sowie einer zu dieser von außerhalb des Gehäuses (6) durch eine Öffnung (9) hereingeführten elektrischen Anschlußleitung (10) dadurch gekennzeichnet, daß die elektrische Anschlußleitung (10) als Metallmantelleitung mit zumindest einem davon mittels eines Minerals (13) elektrisch isolierten Innenleiter (11) ausgebildet ist, daß dieser kraftschlüssig mit der elektrischen Widerstandsheizung (8) verbunden ist und daß der Metallmantel (12) durch die Öffnung in das metallische Gehäuse (6) hineingeführt und durch Verschweißen oder Verlöten mit diesem längs des Randes der Öffnung (9) gasdicht verbunden ist.

2. Starterkat nach Anspruch 1, dadurch gekennzeichnet, daß zumindest das im Gehäuse (6) befindliche Ende der Anschluß leitung (10) verschlossen ist.

3. Starterkat nach Anspruch 2, dadurch gekennzeichnet, daß das in dem Gehäuse befindliche Ende der Anschluß leitung (10) durch Kunstharze oder keramische Klebmassen, insbesondere auf Al₂O₃ oder MgO-Basis verschlossen ist.

4. Starterkat nach Anspruch 2, dadurch gekennzeichnet, daß zumindest das im Gehäuse befindliche Ende der Anschlußleitung (10) durch einen Formkörper verschlossen ist, der mit dem Metallmantel (12) und dem Innenleiter (11) durch Verkleben oder Verglasen verbunden ist.

5. Starterkat nach Anspruch 4, dadurch gekennzeichnet, daß der Formkörper als keramischer Formkörper ausgebildet ist.

6. Starterkat nach einem der Ansprüche 1-5, dadurch gekennzeichnet, daß der Innenleiter (11) mit der elektrischen Widerstandsheizung (8) kraftschlüssig durch Schweißen oder Hartlöten verbunden ist.

7. Starterkat nach einem der Ansprüche 1-6, dadurch gekennzeichnet, daß der Innenleiter (11) aus einer Kupfer, und/oder Aluminium und/oder Eisen und/oder Nickel aufweisenden Legierung besteht.

8. Starterkat nach einem der Ansprüche 1-6, dadurch gekennzeichnet, daß der Innenleiter (11) aus einem Chrom-Nickel-Edelstahl oder hochwarmfesten Nickelbasislegierung besteht.

9. Starterkat nach einem der Ansprüche 1-8, dadurch gekennzeichnet, daß der Aluminiumgehalt des Innenleiters (11) 3-10 Gewichtsprozent, der Eisengehalt bis zu 4 Gewichtsprozent und der Nickelgehalt bis zu 5 Gewichtsprozent beträgt.

## Claims

1. An electrically heatable starter catalytic converter (5) with a metallic housing (6), with an actual catalyst (7) arranged therein and exposed to the flow of exhaust gas, which catalyst (7) has an electrical resistance heating arrangement (8) and also an electrical connection line (10) that enters the housing (6) from outside through an opening (9), characterised in that the electrical connection line (10) is constructed as a metal-clad line with at least one inner conductor (11) electrically insulated therefrom by means of a mineral (13), that this conductor (11) is connected in a force fit with the electrical resistance heating arrangement (8) and that the metal cladding (12) enters the metallic housing (6) through the opening and is connected therewith in a gas-tight manner by welding or soldering along the edge of the opening (9).

2. A starter catalytic converter according to Claim 1, characterised in that at least the end of the connection line (10) situated in the housing (6) is closed.

3. A starter catalytic converter according to Claim 2, characterised in that the end of the connection line (10) situated in the housing is closed by synthetic resins or ceramic adhesive materials, in particular based on Al₂O₃ or MgO.

4. A starter catalytic converter according to Claim 2, characterised in that at least the end of the connection line (10) situated in the housing is closed by a shaped body which is connected with the metal cladding (12) and the inner conductor (11) by gluing or glazing.

5. A starter catalytic converter according to Claim 4, characterised in that the shaped body is constructed as a ceramic shaped body.

6. A starter catalytic converter according to one of Claims 1-5, characterised in that the inner conductor (11) is connected with the electrical resistance heating arrangement (8) in a force-fitting manner by welding or hard soldering.

7. A starter catalytic converter according to one of Claims 1-6, characterised in that the inner conductor (11) consists of an alloy having copper and/or aluminium and/or iron and/or nickel.

8. A starter catalytic converter according to one of Claims 1-6, characterised in that the inner conductor (11) consists of a chromium/nickel high-grade steel or of a highly heat-resistant nickel-based alloy.

9. A starter catalytic converter according to one of Claims 1-8, characterised in that the aluminium content of the inner conductor (11) amounts to 3-10 percentage by weight, the iron content up to 4 percentage by weight and the nickel content up to 5 percentage by weight.

## Revendications

1. Catalyseur de démarrage (5) à chauffage électrique comportant un carter métallique (6), un catalyseur proprement dit (7) qui y est disposé, qui est exposé au courant des gaz d'échappement et qui présente un chauffage à résistance électrique (8), ainsi qu'une ligne électrique (10) de raccordement avec ce chauffage. qui, depuis l'extérieur du carter (6), passe par une ouverture (9), caractérisé par le fait que la ligne de raccordement électrique (10) est conçue sous forme d'une ligne à enveloppe métallique comprenant au moins un conducteur intérieur (11) qui est électriquement isolé de l'enveloppe au moyen d'un produit minéral (13), que ce conducteur intérieur est relié à force avec le chauffage à résistance électrique (8) et que l'enveloppe métallique (12) pénètre dans le carter métallique (6) par l'ouverture et qu'elle est reliée à ce carter le long du bord de l'ouverture (9) par soudage ou brasage.

2. Catalyseur de démarrage selon la revendication 1, caractérisé par le fait qu'au moins l'extrémité de la ligne de raccordement (10) qui se trouve dans le carter (6) est obturée.

3. Catalyseur de démarrage selon la revendication 2, caractérisé par le fait que l'extrémité de la ligne de raccordement (10) qui se trouve dans le carter est obturée par de la résine ou par des masses céramiques adhésives, en particulier à base de Al₂O₃ ou MgO.

4. Catalyseur de démarrage selon la revendication 2, caractérisé par le fait qu'au moins l'extrémité de la ligne de raccordement (10) qui se trouve dans le carter est obturée par un élément moulé qui est relié, par collage ou vitrification, avec l'enveloppe métallique (12) et avec le conducteur intérieur (11).

5. Catalyseur de démarrage selon la revendication 4, caractérisé par le fait que l'élément moulé est conçu sous forme d'élément moulé céramique.

6. Catalyseur de démarrage selon l'une des revendications 1-5, caractérisé par le fait que le conducteur intérieur (11) est relié à force au chauffage à résistance électrique (8), par soudage ou brasage.

7. Catalyseur de démarrage selon l'une des revendications 1-6, caractérisé par le fait que le conducteur intérieur (11) est constitué d'un alliage comprenant du cuivre et/ou de l'aluminium et/ou du fer et/ou du nickel.

8. Catalyseur de démarrage selon l'une des revendications 1-6. caractérisé par le fait que le conducteur intérieur (11) est constitué d'un acier noble au chrome nickel ou d'un alliage réfractaire à base de nickel.

9. Catalyseur de démarrage selon l'une des revendications 1-8, caractérisé par le fait que la teneur en aluminium du conducteur intérieur (11) vaut 3-10 pour-cent en poids, la teneur en fer vaut jusqu'à 4 pour-cent en poids et la teneur en nickel vaut jusqu'à 5 pour cent en poids.
